# NEUE EUROPÄISCHE PATENTSCHRIFT

(11) **EP 3 398 181 B2**
(45) Veröffentlichungstag und Bekanntmachung des Hinweises auf die Entscheidung über den Einspruch: **13.04.2022**
(45) Hinweis auf die Patenterteilung: 15.05.2019
(21) Anmeldenummer: 17707842.5
(22) Anmeldetag: 28.02.2017
(51) Int. Cl.: G08G 1/01, G08G 1/0967, B60W 50/02, G08G 1/16

(54) **VERFAHREN ZUM BETREIBEN EINES MEHRERE KRAFTFAHRZEUGE UMFASSENDEN KOMMUNIKATIONSNETZES UND KRAFTFAHRZEUG**
METHOD FOR OPERATING A COMMUNICATION NETWORK COMPRISING A PLURALITY OF MOTOR VEHICLES, AND MOTOR VEHICLE
PROCÉDÉ POUR FAIRE FONCTIONNER UN RÉSEAU DE COMMUNICATION COMPRENANT PLUSIEURS VÉHICULES AUTOMOBILES ET VÉHICULE AUTOMOBILE

(30) Priorität: 05.03.2016 DE 102016002768
(43) Veröffentlichungstag der Anmeldung: 07.11.2018
(73) Patentinhaber: Audi AG, 85045 Ingolstadt (DE)
(72) Erfinder: BUCHHOLZ, Jan, 84030 Ergolding (DE); ENGEL, Sebastian, 85049 Ingolstadt (DE)
(86) Internationale Anmeldenummer: PCT/EP2017/054558
(87) Internationale Veröffentlichungsnummer: WO 2017/153201

(56) Entgegenhaltungen:
- DE-A1-102010 054 214
- DE-A1-102015 202 837
- US-B1- 6 201 493

## Beschreibung

Die Erfindung betrifft ein Verfahren zum Betreiben eines mehrere Kraftfahrzeuge umfassenden Kommunikationsnetzes, wobei die Kraftfahrzeuge jeweils eine Sensoreinrichtung mit wenigstens einem Umgebungssensor aufweisen.

Derartige Verfahren realisieren üblicherweise eine Fahrzeug-zu-Fahrzeug-Kommunikation über das Kommunikationsnetz. Es ist als eine mögliche Anwendung bekannt, andere Kraftfahrzeuge des Kommunikationsnetzes vor gefährlichen Wettereinflüssen wie beispielsweise Glatteis oder Sichtbehinderung durch starken Regen oder Nebel zu warnen. Zur Detektion einer Sichtbehinderung können auch Sensordaten eines Umgebungssensors der Sensoreinrichtung verwendet werden.

Die DE 10 2010 054 214 A1 offenbart ein Verfahren zum Unterstützen eines Fahrers beim Führen eines Kraftfahrzeugs mithilfe eines Fahrerassistenzsystems, wobei Sensordaten der Umgebung des Kraftfahrzeugs mithilfe einer Sensoreinrichtung erfasst werden. Wird ein Fehler beim Bereitstellen einer Funktionalität durch das Fahrerassistenzsystem erkannt, welcher auf einer fehlerhaften Interpretation der Sensordaten beruht, werden Fehlerdaten, die die fehlerhafte Interpretation charakterisieren, und den Fehlerdaten zugeordnete Positionsdaten in einer Speichereinrichtung abgespeichert und an ein weiteres Fahrzeug oder an eine entfernte Rechenstation übertragen.

Ein solches Verfahren ermöglicht jedoch nur die Ableitung von Interpretationsfehlern durch das Fahrerassistenzsystem zur Vermeidung der Wiederholung bereits aufgetretener Interpretationsfehler. Andere Fehlerarten, die die Zuverlässigkeit des Fahrerassistenzsystems beeinträchtigen können, werden dabei jedoch nicht berücksichtigt.

In DE 10 2011 082 123 A1 wird ein Verfahren zum Betreiben eines Fahrzeugs offenbart, bei dem von der Recheneinheit eines Fahrzeugs eine Anfrage, welche eine Information über eine Fahrzeugkomponente sowie über das Zielgebiet des Fahrzeugs enthält, an eine externe Recheneinheit gesendet wird. Von der externen Recheneinheit wird dann eine Information über eine Einschränkung der Fahrzeugkomponente im Zielgebiet an die Recheneinheit des Fahrzeugs übertragen, wobei die Recheneinheit die Information beim Betreiben des Fahrzeugs berücksichtigt und/oder an einen Fahrer ausgibt. Somit erhalten die Recheneinheit des Fahrzeugs bzw. der Fahrer Informationen über eine zu erwartende Funktionseinschränkung der Fahrzeugkomponente im Zielgebiet.

Der Erfindung liegt mithin die Aufgabe zugrunde, auf Basis eines mehrere Kraftfahrzeuge umfassenden Kommunikationsnetzes die Zuverlässigkeit des Betriebs eines Fahrerassistenzsystems in Kraftfahrzeugen des Kommunikationsnetzes zu verbessern.

Diese Aufgabe wird durch ein Verfahren gemäß Anspruch 1 gelöst.

Die Erfindung beruht auf der Überlegung, eine durch die Sensoreinrichtung selbst festgestellte Fehlfunktion eines Umgebungssensors zur Bestimmung eines örtlichen Störgebiets auszuwerten. Bevorzugt stellt die Sensoreinrichtung Sensordaten für ein Assistenzsystem des Kraftfahrzeugs bereit. Die Sensoreinrichtung des Kraftfahrzeugs kann beispielsweise durch eine eigene Diagnoseeinheit kontinuierlich und/oder regelmäßig einen Betriebszustand ihres wenigstens einen Umgebungssensors bestimmen. Diesen Betriebszustand, insbesondere das Vorliegen der Fehlfunktion, beschreibende Daten können dann mit von einer Positionsermittlungseinrichtung des Kraftfahrzeugs bereitgestellten Positionsdaten zu den Zustandsdaten fusioniert werden. Aus den Positionsdaten ist zweckmäßigerweise die Position des Kraftfahrzeugs, an der die Fehlfunktion festgestellt wurde, ableitbar, insbesondere beschreiben sie eine geographische Koordinate dieser Position. Erfindungsgemäß werden bei einer festgestellten Fehlfunktion die Zustandsdaten bevorzugt mittels einer Kommunikationseinrichtung des Kraftfahrzeugs an die externe Auswertungseinrichtung übertragen. Die Auswertungseinrichtung befindet sich mithin außerhalb des Kraftfahrzeugs, dessen Sensoreinrichtung die Fehlfunktion feststellt, und ist Teil des Kommunikationsnetzes.

Die Übertragung der Zustandsdaten dient der auswertungseinrichtungsseitigen Bestimmung eines Störgebiets, in dem mit einem Auftreten der Fehlfunktion bei dem Umgebungssensor beziehungsweise gleichen und/oder ähnlichen Umgebungssensoren anderer Kraftfahrzeuge gerechnet werden kann. Insbesondere wird dieses Störgebiet durch eine Störquelle erzeugt. Das Störgebiet kann als ein zusammenhängendes geographisches Gebiet beschrieben werden und/oder als ein Streckenabschnitt eines Verkehrswegs, entlang dem mit dem entsprechenden Auftreten der Fehlfunktion gerechnet werden kann.

Das erfindungsgemäße Verfahren ermöglicht mithin die Bereitstellung von Zustandsdaten innerhalb des Kommunikationsnetzes, welche eine von der Sensoreinrichtung selbst festgestellte Fehlfunktion eines Umgebungssensors beschreiben, um Störgebiete, in denen ein negativer Einfluss auf die Funktionsfähigkeit von Umgebungssensoren gegeben sein kann, zu ermitteln. Eine mögliche Funktionsbeeinträchtigung von Fahrerassistenzsystemen, die Sensordaten solcher Umgebungssensoren auswerten, kann dadurch bereits vor dem Auftreten der Funktionsbeeinträchtigung abgeschätzt werden, so dass das Fahrerassistenzsystem mit Vorteil zuverlässiger betreibbar ist.

Erfindungsgemäß werden die Zustandsdaten an wenigstens ein die Auswertungseinrichtung aufweisendes, anderes Kraftfahrzeug übertragen. Das Kommunikationsnetz erlaubt mithin eine direkte Kommunikation zwischen einzelnen Kraftfahrzeugen. Bevorzugt wird dazu ein Protokoll für Drahtlosnetzwerke, insbesondere Automotive WLAN gemäß dem Standard IEEE 802.11p, verwendet. Es ist aber auch eine Broadcast-Übertragung an andere Kraftfahrzeuge des Kommunikationsnetzes denkbar. Zweckmäßigerweise erfolgt eine Übertragung nur an Kraftfahrzeuge innerhalb eines vorgebbaren Relevanzgebietes um das übertragende Kraftfahrzeug, beispielsweise innerhalb eines Radius von einem Kilometer.

Alternativ oder zusätzlich können die Zustandsdaten an eine stationäre Auswertungseinrichtung des Kommunikationsnetzes übertragen werden. Insbesondere kann diese als Backendserver, also als eine zentrale Rechen- und Kommunikationseinrichtung, ausgebildet sein. Die Datenübertragung zwischen den Kraftfahrzeugen des Kommunikationsnetzes und der stationären Auswertungseinrichtung erfolgt bevorzugt über ein Mobilfunknetz, beispielsweise per GPRS, UMTS, LTE oder vergleichbaren Übertragungsprotokollen. Dabei überträgt die stationäre Auswertungseinrichtung die Störgebietsinformation erfindungsgemäß an wenigstens ein Kraftfahrzeug des Kommunikationsnetzes. Insbesondere erfolgt auch die Übertragung von der stationären Auswertungseinrichtung an die Kraftfahrzeuge wie zuvor beschreiben. Bevorzugt überträgt die stationäre Auswertungseinrichtung die Störgebietsinformation nur an Kraftfahrzeuge innerhalb des vorgebbaren Relevanzgebietes.

Bei dem erfindungsgemäßen Verfahren wird es besonders bevorzugt, dass die Auswertungseinrichtung aus mehreren empfangenen, jeweils eine Fehlfunktion beschreibenden Zustandsdaten eine die örtliche Verteilung des Auftretens von Fehlfunktionen beschreibende Störgebietsinformation ermittelt. Die Zustandsdaten können dabei von demselben oder verschiedenen Kraftfahrzeugen übertragen werden, sodass anhand der Positionsdaten die Grenzen des Störgebiets ermittelbar sind. Insbesondere kann die örtliche Verteilung einzelne Konzentrationsbereiche (sog. "Hotspots") oder eine flächenbezogene Häufigkeit des Auftretens von Fehlfunktionen, insbesondere verknüpft mit geodätischen Karteninformationen (sog. "Heatmap"), beschreiben. Vorteilhafterweise werden so die Zustandsdaten mehrerer Fahrzeuge zur Ermittlung der Störgebietsinformation verknüpft, so dass die Auswertungseinrichtung die "Schwarmintelligenz" der Kraftfahrzeuge des Kommunikationsnetzes nutzt.

Außerdem ist es beim erfindungsgemäßen Verfahren von Vorteil, wenn die Auswertungseinrichtung zum Ermitteln der Störgebietsinformation den Zeitpunkt des Feststellens der Fehlfunktionen beschreibende Zeitdaten berücksichtigt. Die Zeitdaten können mit den Zustandsdaten fusioniert vom Kraftfahrzeug, beispielsweise als Zeitstempel, übertragen werden oder in Abhängigkeit eines Empfangszeitpunkts von Zustandsdaten auswertungseinrichtungsseitig erzeugt werden. Insbesondere kann so erkannt werden, ob eine ein Störgebiet verursachende Störquelle weggefallen ist, wenn über einen längeren Zeitraum keine eine Fehlfunktion beschreibenden Zustandsdaten empfangen worden sind. Es können auch zeitliche Störmuster der Störquelle ermittelt werden und die Störgebietsinformation ergänzen.

Um eine besonders hohe Güte der Störgebietsinformation zu erzielen, kann es bei dem erfindungsgemäßen Verfahren vorgesehen sein, dass die Auswertungseinrichtung die Störgebietsinformation anhand von empfangenen, eine fehlerfreie Funktion der Sensoreinrichtung beschreibenden Zustandsdaten und/oder anhand von das Störgebiet und/oder seine Umgebung beschreibenden Geodaten plausibilisiert. Wie bereits beschrieben können auch eine fehlerfreie Funktion der Sensoreinrichtung beschreibende Zustandsdaten, selbstverständlich vorzugsweise fusioniert mit den Positionsdaten, an die Auswertungseinrichtung übertragen werden. Auf diese Weise kann erkannt werden, dass eine von einem Kraftfahrzeug festgestellte Fehlfunktion auf eine kraftfahrzeuginterne, dieses eine Kraftfahrzeug betreffenden Störung zurückzuführen ist, wenn andere Kraftfahrzeuge keine Fehlfunktion an der gleichen oder einer nahen Position feststellen. Zur Plausibilisierung können auch Geodaten, bevorzugt einer mit der Auswertungseinrichtung verbundenen Geodateneinrichtung, verwendet werden. Ist aus diesem Geodaten ableitbar, dass sich in der Nähe eines Störgebiets bzw. eines potentiellen Störgebiets eine Störquelle befindet, beispielsweise ein Funksender, so kann vermutet werden, dass dieser das Störgebiet erzeugt.

Es ist bei dem erfindungsgemäßen Verfahren zudem besonders zweckmäßig, wenn die Auswertungseinrichtung die Störgebietsinformation hinsichtlich einer, insbesondere temporären oder dauerhaften, Ursache der Fehlfunktionen klassifiziert. Temporär auftretende Ursachen für eine Störgebiet können beispielsweise Witterungseinflüsse wie Nebel oder Regen, Steinschläge oder Verschmutzungen des Umgebungssensor sein, die beispielsweise von einer verschmutzten Fahrbahn oder von einem verschmutzten vorausfahrenden Verkehrsteilnehmer wie einem landwirtschaftlichen Fahrzeug hervorgerufen werden. Dabei sind von Verschmutzungen besonders optische Umgebungssensoren betroffen.

Dauerhaft auftretende Ursachen für ein Störgebiet können insbesondere elektromagnetische Felder sein, die von starken Sendern wie Funkmasten oder im Bereich von Flughäfen erzeugt werden. Insbesondere können derartige elektromagnetische Felder Umgebungssensoren auf Radarbasis stören. Bei der Klassifikation können bevorzugt die zuvor beschriebenen Geodaten oder Zeitdaten zusätzlich berücksichtigt werden.

Die Erfindung sieht ferner vor, dass wenigstens ein Kraftfahrzeug die Störgebietsinformation zur Ausgabe einer auf das Erreichen oder das bevorstehende Erreichen des Störgebiets, insbesondere auf mögliche Störungen eines Sensordaten eines betroffenen Umgebungssensors auswertenden Fahrzeugsystems, hinweisende Insasseninformation auswertet. Insassen von sich dem Störgebiet nähernden Kraftfahrzeugen werden so vorausschauend über eine mögliche Störung des Fahrzeugsystems, insbesondere eines Fahrerassistenzsystems, informiert. Ein Fahrer kann sich so darauf einstellen, dass er beim Erreichen des Störgebiets auf bestimmte Fahrzeugsysteme nicht zurückgreifen kann, was zusätzlich die Zuverlässigkeit eines solchen Fahrzeugsystems erhöht.

Daneben betrifft die Erfindung ein Kraftfahrzeug, aufweisend eine Sensoreinrichtung mit wenigstens einem Umgebungssensor, eine Kommunikationseinrichtung zur Kommunikation mit wenigstens einer Auswertungseinrichtung eines mehrere Fahrzeuge umfassenden Kommunikationsnetzes und eine zur Durchführung des erfindungsgemäßen Verfahrens ausgebildete Steuerungseinrichtung. Das erfindungsgemäße Kraftfahrzeug kann auch eine eigene Auswertungseinrichtung aufweisen, welche zur Ermittlung einer Störbereichsinformation aus von anderen Kraftfahrzeugen des Kommunikationsnetzes mittels der Kommunikationseinrichtung empfangenen Zustandsdaten ausgebildet ist. Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze einer externen Auswertungseinrichtung und eines Ausführungsbeispiels eines erfindungsgemäßen Kraftfahrzeugs;
- Fig. 2: eine Prinzipskizze eines Beispiels für ein das in Fig. 1 gezeigte Kraftfahrzeug umfassendes Kommunikationsnetz;
- Fig. 3: eine Prinzipskizze eines Straßennetzes mit einer Störquelle; und
- Fig. 4: eine Prinzipskizze eines weiteren Beispiels für ein das in Fig. 1 gezeigte Kraftfahrzeug umfassendes Kommunikationsnetz.

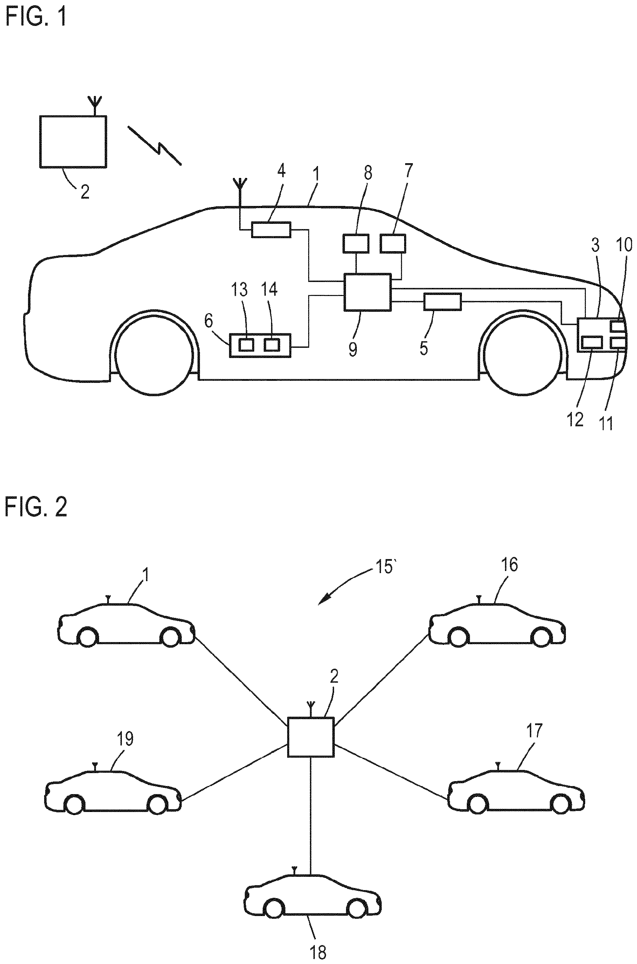

Fig. 1 ist eine Prinzipskizze eines Ausführungsbeispiels eines Kraftfahrzeugs 1. Daneben zeigt Fig. 1 rein schematisch eine externe Auswertungseinrichtung 2. Das Kraftfahrzeug 1 umfasst eine Sensoreinrichtung 3, eine Kommunikationseinrichtung 4, ein Fahrzeugsystem 5 in Form eines Fahrerassistenzsystems, eine Navigationseinrichtung 6, eine optische und akustische Ausgabeeinrichtung 7 und eine eigene Auswertungseinrichtung 8, welche jeweils eine Datenverbindung mit einer Steuerungseinrichtung 9 des Kraftfahrzeugs 1 aufweisen. Die Auswertungseinrichtung 2 umfasst ihrerseits eine nicht gezeigte Kommunikationseinrichtung oder ist mit einer nicht gezeigten Kommunikationseinrichtung verbunden, mittels welcher die Auswertungseinrichtung mit dem Kraftfahrzeug 1 kommuniziert.

Die Sensoreinrichtung 3 umfasst einen als Radarsensor ausgebildeten Umgebungssensor 10 und einen als optischen Sensor ausgebildeten Umgebungssensor 11. Gemäß weiteren Ausführungsbeispielen des Kraftfahrzeugs 1 weist die Sensoreinrichtung 3 weitere Umgebungssensoren 10, 11 auf, wie zusätzliche Radarsensoren, zusätzliche optische Sensoren (Kameras, Lidarsensoren etc.) oder Ultraschallsensoren auf. Ferner weist die Sensoreinrichtung 3 eine Diagnoseeinheit 12 auf, mittels welcher eine Fehlfunktion eines Umgebungssensors 10, 11 feststellbar und ein Fehlersignal erzeugbar ist. Das Fahrzeugsystem 5 ist ein Fahrerassistenzsystem, das zur Erfüllung seiner Assistenzfunktionen Sensordaten der Sensoreinrichtung 3 auswertet, wobei bei einer Fehlfunktion eines Umgebungssensors 10, 11 die Funktion des Fahrzeugsystems 5 beeinträchtigt ist.

Die Kommunikationseinrichtung 4 ist zur Kommunikation mit der externen Auswertungseinrichtung 2 unter Verwendung eines Mobilfunkstandards wie GPRS, UMTS oder LTE oder eines drahtlosen Netzwerkprotokolls wie Automotive WLAN gemäß dem Standard IEEE 802.11p ausgebildet.

Die Navigationseinrichtung 6 umfasst eine Positionserfassungseinrichtung 13, mittels der über ein globales Satellitennavigationssystem wie GPS oder Galileo eine momentane Position des Kraftfahrzeugs 1 ermittelbar ist und die Position beschreibende Positionsdaten bereitstellbar sind. Außerdem weist die Navigationseinrichtung 6 eine Geodateneinrichtung 14 auf, in welcher Geodaten in Form von digitalen Karten gespeichert sind.

Fig. 2 zeigt ein Beispiel eines das in Fig. 1 gezeigte Kraftfahrzeug 1 und vier weitere Kraftfahrzeuge 16-19 umfassenden Kommunikationsnetzes 15. Die Kraftfahrzeuge 16-19 sind ähnlich zu dem in Fig. 1 gezeigten Kraftfahrzeug ausgebildet, das heißt sie weisen Komponenten mit der gleichen Funktion wie die zuvor beschriebenen Komponenten des Kraftfahrzeugs 1 auf. Dabei kommunizieren die Kraftfahrzeuge 1, 16-19 mit einer stationären externen Auswertungseinheit 2 in Form eines Backendservers über ein Mobilfunkprotokoll. In diesem Fall ist die eigene Auswertungseinheit 8 der Kraftfahrzeuge 1, 16-19 nicht erforderlich.

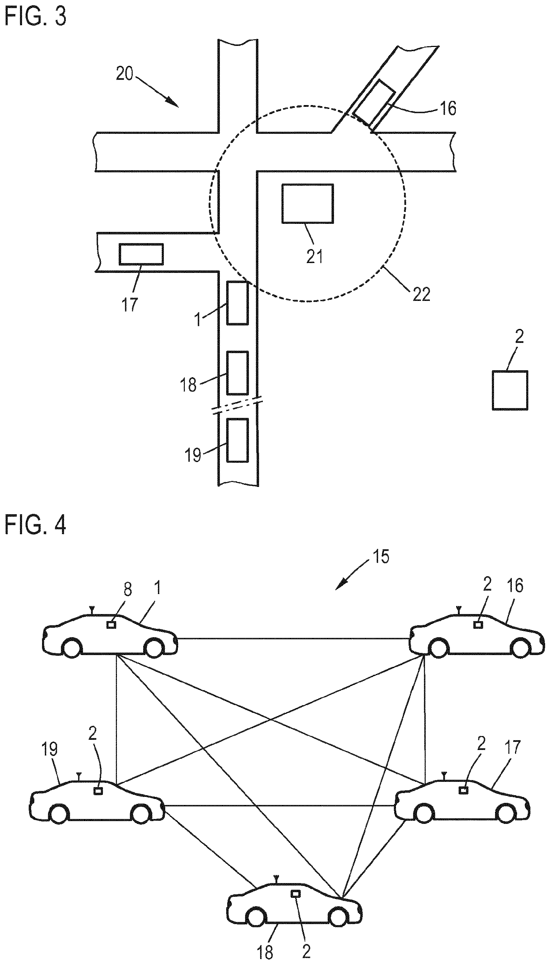

Fig. 3 ist eine nicht maßstabsgetreue Prinzipskizze eines Straßennetzes 20 mit einer Störquelle 21, der stationären, externen Auswertungseinheit 2 und den das Kommunikationsnetz 15 bildenden Kraftfahrzeugen 1, 16-19. Die Steuerungseinrichtung 9 des Kraftfahrzeug 1 ist zur Durchführung eines Verfahrens zum Betreiben des Kommunikationsnetzes 15 ausgebildet, wobei ein Ausführungsbeispiel dieses Verfahrens im Folgenden anhand von Fig. 3 näher erläutert wird:

In einem ersten Schritt bestimmt die Diagnoseeinheit 12 der Sensoreinrichtung 3 einen Betriebszustand der Umgebungssensoren 10, 11 und stellt der Steuerungseinrichtung 9 das Vorliegen einer Fehlfunktion eines der Umgebungssensoren 10, 11 beschreibende Zustandsdaten bereit. Diese werden in einem folgenden Schritt durch die Steuerungseinrichtung 9 mit von der Positionsermittlungseinrichtung 13 der Navigationseinrichtung 6 bereitgestellten, die momentane Position des Kraftfahrzeugs 1 beschreibenden Positionsdaten sowie mit den Zeitpunkt des Bestimmens des Betriebszustands beschreibenden Zeitdaten fusioniert. Die Zustandsdaten bilden mithin einem Datensatz aus einer Information, ob und bei welchem Umgebungssensor 10, 11 eine Fehlfunktion vorliegt, einer geographischen Koordinate des Kraftfahrzeugs bezüglich des Ortes, an dem der Betriebszustand bestimmt wurde, und einem Zeitstempel. Sodann werden die Zustandsdaten der Kommunikationseinrichtung 4 bereitgestellt, welche sie an die stationäre Auswertungseinrichtung 2 mittels des Mobilfunkprotokolls überträgt. In einem anderen Ausführungsbeispiel fügt die Auswertungseinrichtung 2 den Zustandsdaten die Zeitdaten anhand des Empfangszeitpunkts hinzu.

Vorliegend ist die Störquelle 21 beispielsweise ein Radarsystem eines Flughafens, welches durch starke elektromagnetische Sendeimpulse den als Radarsensor ausgebildeten Umgebungssensor 10 stört. Nähert sich das Kraftfahrzeug 1 der Störquelle 21, so wird durch die Diagnoseeinrichtung 12 diese Störung, die sich in einer Fehlfunktion des Umgebungssensors 10 äußert, festgestellt. Mithin werden vor der störenden Einwirkung der Störquelle 21 Zustandsdaten an die Auswertungseinrichtung 2 übertragen, die eine fehlerfreie Funktion der Umgebungssensoren 10, 11 beschreiben, und ab einer Annäherung an die Störquelle 21 die Fehlfunktion des Umgebungssensor 10 beschreibenden Zustandsdaten an die Auswertungseinrichtung 2 übertragen. Hat sich das Kraftfahrzeug 1 im Straßennetz 20 wieder so weit von der Störquelle 21 entfernt, dass der Umgebungssensor 10 fehlerfrei funktioniert, so werden erneut die fehlerfreie Funktion der Umgebungssensoren 10,11 beschreibende Zustandsdaten übertragen.

Analog dazu übertragen auch die weiteren Kraftfahrzeuge 16-19 entsprechende Zustandsdaten an die stationäre Auswertungseinrichtung. So wird auch ein Umgebungssensor des Kraftfahrzeugs 16 ungefähr zeitgleich mit dem Kraftfahrzeug 1 an einem anderen Ort des Straßennetzes 20 von der Störquelle 21 gestört und übermittelt entsprechende Zustandsdaten mit Positionsdaten und Zeitdaten an die Auswertungseinrichtung 2.

Die Auswertungseinrichtung 2 ermittelt sodann eine ein Störgebiet 22 für Radarsensoren der Kraftfahrzeuge 1, 16-19 beschreibende Störgebietsinformation. Dazu berücksichtigt die Auswertungseinrichtung 2 die jeweiligen Positionsdaten, um die geographische Erstreckung des Störgebiets 22 und die örtliche Verteilung des Auftretens von Fehlfunktionen im Störgebiet 22 zu ermitteln. Zudem plausibilisiert die Auswertungseinrichtung 2 die Störgebietsinformation anhand der empfangenen, eine fehlerfreie Funktion von Umgebungssensoren beschreibenden Zustandsdaten und anhand von das Störgebiet 22 und seine Umgebung beschreibenden Geodaten. Diese Geodaten liegen der als Backenendserver ausgebildeten Auswertungseinrichtung 2 vor, welche vorliegend beschreiben, dass sich der Flughafen mit der Störquelle 21 in räumlicher Nähe zum Störgebiet 22 befindet. Es kann mithin aus der räumlichen Nähe des Flughafens zum Störgebiet 22 sowie dem zeitlichen und räumlichen Zusammenhang von Fehlfunktionen bei den Kraftfahrzeugen 1, 16 darauf geschlossen werden, dass es sich bei den Fehlfunktion nicht um eine sporadische, durch eines der Kraftfahrzeuge 1, 16 selbst bedingte Fehlfunktion handelt, sondern um eine externe Störung durch die Störquelle 21.

Des Weiteren klassifiziert die Auswertungseinrichtung 2 die Störgebietsinformation hinsichtlich einer temporären oder dauerhaften Ursache der Fehlfunktionen. Dazu wertet sie über eine längere Zeit Zustandsdaten einer Vielzahl von, in Fig. 3 nicht gezeigten, Kraftfahrzeugen aus und berücksichtigt zusätzlich die Geodaten, welche im vorliegenden Fall für eine dauerhafte, durch den Flughafen verursachte Störquelle sprechen. Temporäre Ursachen können in diesem Zusammenhang beispielsweise zeitlich und lokal begrenzt auftretende Witterungseinflüsse wie Niederschläge oder Nebel bzw. Verschmutzungen auf der Fahrbahn, beispielsweise durch landwirtschaftliche Fahrzeuge, sein, die insbesondere den optischen Sensor 11 beeinträchtigen.

Hinsichtlich der Beschreibung der örtlichen Verteilung des Auftretens von Fehlfunktionen durch die Störgebietsinformation werden von der Auswertungseinrichtung 2 örtliche Konzentrationsgebiete des Auftretens, sog. Hotspots, ermittelt, wobei das Störgebiet 22 zusätzlich als sog. Heatmap, die die örtliche Häufigkeit des Auftretens der Fehlfunktionen beschreibt, charakterisiert wird. Dabei extrapoliert die Auswertungseinrichtung 2 unter Berücksichtigung der Geodaten die räumliche Erstreckung des Störgebiets 22 um die Störquelle 21, da bezüglich Stellen des Störgebiets 22 außerhalb des Straßennetzes 20 typischerweise keine Zustandsdaten anfallen. In einem alternativen Ausführungsbeispiel beschreibt die Störgebietsinformation lediglich Streckenabschnitte des Straßennetzes 20, in denen Fehlfunktion auftreten.

Die stationäre Auswertungseinrichtung 2 überträgt die Störgebietsinformation nach ihrer Ermittlung an alle Kraftfahrzeuge 17, 18 innerhalb eines vorgegebenen Relevanzbereichs von in diesem Fall einem Kilometer um das Störgebiet 22. Vorliegend ist das Kraftfahrzeug 19 noch so weit vom Störgebiet 22 entfernt, dass eine Übermittlung der Störgebietsinformation noch nicht und erst beim Erreichen des Relevanzbereichs erfolgt. Die Kraftfahrzeuge 17, 18 empfangen die Störgebietsinformation mittels ihrer Kommunikationseinrichtung 4, wonach die Steuerungseinrichtung 9 die Ausgabeeinrichtung 7 zur Ausgabe einer optischen und akustischen Warnung an den Fahrer des Kraftfahrzeugs 17, 18 vor dem bevorstehenden Erreichen des Störgebiets 22 und vor einer möglichen Beeinträchtigung der Funktion des Fahrzeugsystems 5 ansteuert.

Ermittelt die stationäre Auswertungseinrichtung 2 anhand von Zustandsdaten von später das Störgebiet 22 erreichenden, hier nicht gezeigten Kraftfahrzeugen, dass im Störgebiet 22 keine Fehlfunktionen mehr auftreten, so beendet die Auswertungseinrichtung 2 die Übertragung der Störgebietsinformation.

Fig. 4 zeigt ein Beispiel eines weiteren, die Kraftfahrzeuge 1, 16-19 umfassenden Kommunikationsnetzes 15'. Dieses Kommunikationsnetz wird gemäß einem weiteren Ausführungsbeispiel des Verfahrens betrieben, wobei die Kraftfahrzeuge 1, 16-19 unmittelbar untereinander kommunizieren und jeweils eine eigene externe Auswertungseinheit 2 aufweisen. Für diese Kommunikation wird Automotive WLAN gemäß dem Standard IEEE 802.11p oder alternativ ein Broadcasting-Verfahren verwendet. Im Übrigen wird das Kommunikationsnetz 15' analog zum Kommunikationsnetz 15 betrieben, wobei die Ermittlung der Störgebietsinformation hier nicht durch einen stationären Backendserver erfolgt, sondern durch die jeweiligen Auswertungseinheiten 2 der einzelnen Kraftfahrzeuge 1, 16-19, welche die Zustandsdaten von den jeweils anderen Kraftfahrzeugen 1, 16-19 erhalten. In einem weiteren Ausführungsbeispiel sind die Architekturen der Kommunikationsnetze 15, 15' zu einem gemischten Kommunikationsnetz mit stationären und in den Kraftfahrzeugen 1, 16-19 verbauten Auswertungseinrichtungen 2 kombiniert.

## Patentansprüche

1. Verfahren zum Betreiben eines mehrere Kraftfahrzeuge (1, 16 - 19) umfassenden Kommunikationsnetzes (15, 15'), wobei die Kraftfahrzeuge (1, 16 - 19) jeweils eine Sensoreinrichtung (3) mit wenigstens einem Umgebungssensor (10, 11) aufweisen, wobei wenigstens ein Kraftfahrzeug (1) bei einer von seiner Sensoreinrichtung (3) festgestellten Fehlfunktion eines Umgebungssensors (10) die Fehlfunktion beschreibende und Positionsdaten des Kraftfahrzeugs umfassende Zustandsdaten an wenigstens eine externe Auswertungseinrichtung (2) überträgt, die eine, ein Störgebiet (22) für Umgebungssensoren (10) der Kraftfahrzeuge (1, 16 - 19), beschreibende Störgebietsinformation ermittelt, wobei die Zustandsdaten an eine stationäre Auswertungseinrichtung (2) des Kommunikationsnetzes (15, 15'), insbesondere ein Backendserver, und/oder wenigstens ein die Auswertungseinrichtung (2) aufweisendes, anderes Kraftfahrzeug (16 - 19) übertragen werden, wobei die stationäre Auswertungseinrichtung (2) die Störgebietsinformation an wenigstens ein Kraftfahrzeug (16 - 19) des Kommunikationsnetzes überträgt, wobei wenigstens ein Kraftfahrzeug (16 - 19) die Störgebietsinformation zur Ausgabe einer auf das Erreichen oder das bevorstehende Erreichen des Störgebiets, insbesondere auf mögliche Störungen eines
Sensordaten eines betroffenen Umgebungssensors (10) auswertenden Fahrzeugsystems (5), hinweisende Insasseninformation auswertet.

2. Verfahren nach einem der vorhergehenden Ansprüche,
**dadurch gekennzeichnet,**
**dass** die Auswertungseinrichtung (2) aus mehreren empfangenen, jeweils eine Fehlfunktion beschreibenden Zustandsdaten eine die örtliche Verteilung des Auftretens von Fehlfunktionen beschreibende Störgebietsinformation ermittelt.

3. Verfahren nach einem der vorhergehenden Ansprüche,
**dadurch gekennzeichnet,**
**dass** die Auswertungseinrichtung (2) zum Ermitteln der Störgebietsinformation den Zeitpunkt des Feststellens der Fehlfunktionen beschreibende Zeitdaten berücksichtigt.

4. Verfahren nach einem der vorhergehenden Ansprüche,
**dadurch gekennzeichnet,**
**dass** die Auswertungseinrichtung (2) die Störgebietsinformation anhand von empfangenen, eine fehlerfreie Funktion der Sensoreinrichtung (3) beschreibenden Zustandsdaten und/oder anhand von das Störgebiet (22) und/oder seine Umgebung beschreibenden Geodaten plausibilisiert.

5. Verfahren nach einem der vorhergehenden Ansprüche,
**dadurch gekennzeichnet,**
**dass** die Auswertungseinrichtung (2) die Störgebietsinformation hinsichtlich einer, insbesondere temporären oder dauerhaften, Ursache der Fehlfunktionen klassifiziert.

## Claims

1. Method for operating a communication network (15, 15') which comprises a plurality of motor vehicles (1, 16-19), wherein the motor vehicles (1, 16-19) each have a sensor apparatus (3) having at least one environment sensor (10, 11), wherein at least one motor vehicle (1) in the event of a malfunction of an environment sensor (10) determined by its sensor apparatus (3) transmits the status data which describe the malfunction and which comprise position data of the motor vehicle to at least one external evaluation apparatus (2), which establishes a disruption region information item which describes a disruption region (22) for environment sensors (10) of the motor vehicles (1, 16-19), wherein the status data are transmitted to a stationary evaluation apparatus (2) of the communication network (15, 15'), in particular a backend server, and/or at least one other vehicle (16-19) which has the evaluation apparatus (2), wherein the stationary evaluation apparatus (2) transmits the disruption region information to at least one motor vehicle (16-19) of the communication network, wherein at least one motor vehicle (16-19) evaluates the disruption region information for output of a passenger information item which indicates that the disruption region has been reached or will be imminently reached, in particular indicates potential disruptions of a vehicle system (5) which evaluates sensor data of an affected environment sensor (10).

2. Method according to any one of the preceding claims,
**characterised in that**
the evaluation apparatus (2) establishes, from a plurality of received status data which each describe a malfunction, a disruption region information item which describes the local distribution of the occurrence of malfunctions.

3. Method according to any one of the preceding claims,
**characterised in that**
the evaluation apparatus (2), in order to establish the disruption region information, takes into account time data which describe the time at which the malfunctions were determined.

4. Method according to any one of the preceding claims,
**characterised in that**
the evaluation apparatus (2) checks the plausibility of the disruption region information using received status data which describe a correct function of the sensor apparatus (3) and/or using geodata which describe the disruption region (22) and/or the environment thereof.

5. Method according to any one of the preceding claims,
**characterised in that**
the evaluation apparatus (2) classifies the disruption region information with regard to an, in particular temporary or permanent, cause of the malfunctions.

## Revendications

1. Procédé servant à faire fonctionner un réseau de communication (15, 15') comprenant plusieurs véhicules automobiles (1, 16 - 19), dans lequel les véhicules automobiles (1, 16 - 19) présentent respectivement un dispositif de capteur (3) avec au moins un capteur d'environnement (10, 11), dans lequel au moins un véhicule automobile (1) transmet, dans le cas d'un dysfonctionnement d'un capteur d'environnement (10) constaté par son dispositif de capteur (3), des données d'état décrivant le dysfonctionnement et comprenant des données de position du véhicule automobile à au moins un dispositif d'évaluation externe (2), qui détermine une information de zone d'interférence décrivant une zone d'interférence (22) pour des capteurs d'environnement (10) des véhicules automobiles (1, 16 - 19), dans lequel les données d'état sont transmises à un dispositif d'évaluation stationnaire (2) du réseau de communication (15, 15'), en particulier un serveur backend, et/ou au moins un autre véhicule automobile (16 - 19) présentant le dispositif d'évaluation (2), dans lequel le dispositif d'évaluation stationnaire (2) transmet l'information de zone d'interférence à au moins un véhicule automobile (16 - 19) du réseau de communication, dans lequel au moins un véhicule automobile (16 - 19) évalue l'information de zone d'interférence pour émettre une information de passager soulignant l'atteinte ou l'atteinte imminente de la zone d'interférence, en particulier des interférences éventuelles d'un système de véhicule (5) évaluant des données de capteur d'un capteur d'environnement (10) concerné.

2. Procédé selon l'une quelconque des revendications précédentes,
**caractérisé en ce**
**que** le dispositif d'évaluation (2) détermine, à partir de plusieurs données d'état reçues décrivant respectivement un dysfonctionnement, une information de zone d'interférence décrivant la répartition spatiale de la survenue des dysfonctionnements.

3. Procédé selon l'une quelconque des revendications précédentes,
**caractérisé en ce**
**que** le dispositif d'évaluation (2) tient compte, pour déterminer l'information de zone d'interférence, de données temporelles décrivant le moment de la constatation des dysfonctionnements.

4. Procédé selon l'une quelconque des revendications précédentes,
**caractérisé en ce**
**que** le dispositif d'évaluation (2) établit la plausibilité de l'information de zone d'interférence à l'aide de données d'état reçues décrivant un fonctionnement sans défaillance du dispositif de capteur (3) et/ou à l'aide de données géographiques décrivant la zone d'interférence (22) et/ou son environnement.

5. Procédé selon l'une quelconque des revendications précédentes,
**caractérisé en ce**
**que** le dispositif d'évaluation (2) classe l'information de zone d'interférence par rapport à une cause, en particulier temporaire ou permanente, des dysfonctionnements.
